Europäisches Patentamt

European Patent Office

Office européen des brevets

(11) Veröffentlichungsnummer: **0 360 030 B1**

(12) **EUROPÄISCHE PATENTSCHRIFT**

(45) Veröffentlichungstag der Patentschrift: **12.05.93**

(51) Int. Cl.⁵: **C08J 9/14**, //C08L25/04

(21) Anmeldenummer: **89115765.3**

(22) Anmeldetag: **26.08.89**

(54) **Verfahren zur Herstellung von Schaumstoffplatten mit hoher Druckfestigkeit und hoher Dimensionsstabilität.**

(30) Priorität: **01.09.88 DE 3829630**

(43) Veröffentlichungstag der Anmeldung:
**28.03.90 Patentblatt 90/13**

(45) Bekanntmachung des Hinweises auf die
Patenterteilung:
**12.05.93 Patentblatt 93/19**

(84) Benannte Vertragsstaaten:
**BE DE FR GB IT NL SE**

(56) Entgegenhaltungen:
**WO−A−86/06084**

(73) Patentinhaber: **BASF Akfiengesellschaft**
**Carl−Bosch−Strasse 38**
**W−6700 Ludwigshafen(DE)**

(72) Erfinder: **Alicke, Gerhard**
**Brunnerstrasse 11**
**W−6520 Worms 1(DE)**
Erfinder: **Weber, Reinhold**
**An der Steinernen Bruecke 11**
**W−6704 Mutterstadt(DE)**
Erfinder: **Weilbacher, Manfred, Dr.**
**Taunusstrasse 27**
**W−6710 Frankenthal(DE)**

**Beschreibung**

Gegenstand der Erfindung ist ein verfahren zur Herstellung von Schaumstoffplatten mit hoher Druckfestigkeit und hoher Dimensionsstabilität durch Extrusion eines Gemisches aus einem Styrolpolymerisat, einem Treibmittel und gegebenenfalls üblichen Zusatzstoffen.

Für die Herstellung von Schaumstoffen auf Basis von Styrolpolymerisaten ist eine Vielzahl von Treibmitteln vorgeschlagen worden. Bevorzugt wird Methylchlorid verwendet. Wegen seiner Toxizität sind jedoch extreme Vorsichtsmaßnahmen sowohl bei der Herstellung als auch bei Nachlagerung des Schaumstoffs erforderlich. Der Schaumstoff zeigt zudem bei erhöhten Temperaturen ein beträchtliches Schwindungsverhalten. Bei Verwendung von Chlorfluorkohlenwasserstoffen, wie Dichlordifluormethan, als Treibmittel erhält man Schaumstoffe, die sich bei erhöhten Temperaturen ausdehnen. Gemische aus etwa gleichen Teilen Methylchlorid und Dichlordifluormethan führen zwar zu dimensionsstabilen Schaumstoffen, wegen der Toxizität des Methylchlorids verbietet sich jedoch ihr Einsatz. Ersetzt man Methylchlorid durch das wesentlich weniger toxische Ethylchlorid, so entsteht ein relativ weicher Schaum, der eine ungenügende Druckfestigkeit aufweist. Auch Kohlendioxid ist bereits als Treibmittel empfohlen worden. Sein Einsatz führt jedoch zu offenzelligen Schaumstoffen, die ein hohes Wasseraufnahmevermögen besitzen.

Aus der GB − A 15 37 421 ist bereits bekannt, bei der Herstellung von Polystyrolschaumstoffplatten in Abwesenheit von Dichlordifluormethan zu arbeiten und als Treibmittel ein Gemisch aus 30 bis 70 Gew. − % 1,1, − Difluor − 1 − chlorethan und mindestens einer Verbindung aus der Gruppe Fluorchlormethan, Methylchlorid, Ethylchlorid, Chlordifluormethan oder 1,1 − Difluormethan zu verwenden. Derartige Schaumstoffe zeigen jedoch beim Lagern eine unbefriedigende Dimensionsstabilität.

Aus der WO − A − 86/06084 ist ein Verfahren zur Herstellung eines extrudierten Polystyrolschaumkörpers bekannt, bei dem ein Treibmittelgemisch bestehend aus 3 bis 45 Gew. − % Kohlendioxid, 5 bis 97 Gew. − % Ethylchlorid und bis zu 90 Gew. − % eines Fluorchlorkohlenwasserstoffs, ausgewählt aus Dichlordifluormethan, 1 − Chlor − 1,1 − difluoro − ethan und Mischungen davon, eingesetzt wird. Der damit erhaltene Schaum eignet sich als Isoliermaterial.

Die Aufgabe der Erfindung besteht darin, ein Verfahren zur Herstellung von Schaumstoffplatten aus Styrolpolymerisaten aufzuzeigen, bei dem keine toxischen Treibmittel verwendet werden und das zu Schaumstoffen mit geschlossenen Zellen führt, die nur ein geringes Wasseraufnahmevermögen besitzen, die dimensionsstabil sind und eine hohe Druckfestigkeit und Wärmeformbeständigkeit aufweisen. Weiterhin ist es Aufgabe der Erfindung, den Gehalt an Dichlordifluormethan im Schaumstoff zu reduzieren, da dieser Stoff angeblich in der Atmosphäre die Wirksamkeit der Ozonschicht als Solarschirm vermindert.

Die Aufgabe der Erfindung wird gelöst durch die Verwendung eines Treibmittelgemisches enthaltend 10 bis 50 Gew. − % 1,1 − Difluor − 1 − chlorethan, 10 bis 50 Gew. − % Dichlordifluormethan, 5 bis 50 Gew. − % Kohlendioxid sowie 0 bis 50 Gew. − % gesättigte $C_3$ − bis $C_5$ − Kohlenwasserstoffe und 0 bis 50 Gew. − % Monochlordifluormethan.

Gegenstand der Erfindung ist somit ein Verfahren zur Herstellung von Schaumstoffplatten mit hoher Druckfestigkeit und hoher Dimensionsstabilität durch Extrusion eines Gemisches aus einem Styrolpolymerisat und 6 bis 16 Gew. − %, bezogen auf das Styrolpolymerisat eines Treibmittels sowie gegebenenfalls üblichen Zusatzstoffen, dadurch gekennzeichnet, daß man als Treibmittel ein Gemisch verwendet aus

a) 10 bis 50 Gew. − % 1,1 − Difluor − 1 − chlorethan

b) 10 bis 50 Gew. − % Dichlordifluormethan

c) 5 bis 50 Gew. − % Kohlendioxid

d) 0 bis 50 Gew. − % gesättigte $C_3$ − bis $C_5$ − Kohlenwasserstoffe und

e) 0 bis 50 Gew. − % Monochlordifluormethan.

Styrolpolymerisate im Sinne dieser Erfindung sind Polystyrol und Mischpolymerisate des Styrols, die mindestens 50 Gew. − % Styrol einpolymerisiert enthalten. Als Comonomere kommen z.B. in Betracht α − Methylstyrol, kernhalogenierte Styrole, kernalkylierte Styrole, Acrylnitril, Ester der (Meth)acrylsäure von Alkoholen mit 1 bis 8 C − Atomen, N − Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Das Treibmittel wird in einer Menge von 6 bis 16 Gew. − %, vorzugsweise 8 bis 15 Gew. − %, insbesondere 10 bis 14 Gew. − %, bezogen auf das Styrolpolymerisat, verwendet. Es enthält

a) 10 bis 50 Gew. − %, vorzugsweise 20 bis 45 Gew. − % 1,1 − Difluor − 1 − chlorethan,

b) 10 bis 50 Gew. − %, vorzugsweise 20 bis 45 Gew. − % Dichlordifluormethan,

c) 5 bis 50 Gew. − %, vorzugsweise 10 bis 40 Gew. − % Kohlendioxid sowie gegebenenfalls

d) bis zu 50 Gew. − %, vorzugsweise bis zu 30 Gew. − %, insbesondere 10 bis 30 Gew. − % gesättigte $C_3$ − bis $C_5$ − Kohlenwasserstoffe, wie Propan, n − Butan, i − Butan, n − Pentan oder i − Pentan und gegebenenfalls

e) bis zu 50 Gew. – %, vorzugsweise bis zu 30 Gew. – %, insbesondere 10 bis 30 Gew. – % Monochlor – difluormethan.

Die optimale Zusammensetzung des Treibmittelgemisches läßt sich leicht durch Vorversuche ermitteln. Erhöht man den Gehalt an 1,1 – Difluor – 1 – chlorethanoder Dichlordifluormethan auf über 50 Gew. – %, so wird die Dimensionsstabilität des Schaumstoffs unbefriedigend. Erhöht man den Gehalt an Kohlendioxid auf über 50 Gew. – %, so erhält man stark offenzellige Schaumstoffe mit hohem Wasseraufnahmevermögen. Erhöht man den Gehalt an gesättigten $C_3$ – bis $C_5$ – Kohlenwasserstofen auf über 50 Gew. – %, so ist das Wärmedämmverhalten des Schaumstoffs unbefriedigend. Gleiches gilt bei Erhöhung des Gehalts an Monochlordifluormethan auf über 50 Gew. – %.

Als übliche Zusatzstoffe können dem Styrolpolymerisat – Treibmittel – Gemisch Antistatika, Stabilisato – ren, Farbstoffe, Schmiermittel, Füllstoffe, Flammschutzmittel und/oder Keimbildner in üblichen Mengen zugesetzt werden.

Die Herstellung der Schaumstoffe erfolgt erfindungsgemäß in an sich bekannter Weise durch Extrusion. In einem Extruder wird das durch Erwärmen plastifizierte Styrolpolymerisat mit dem Treibmittelgemisch und den Zusatzstoffen innig vermischt. Das Gemisch durchläuft sodann eine Beruhigungszone, in der es unter ständigem Rühren auf eine Temperatur zwischen etwa 100 und 120˚C gekühlt und anschließend durch eine Düse zu Platten extrudiert wird.

Die Erfindung erlaubt die kontinuierliche Herstellung von Platten der Dicke bis 160 mm, einer Breite bis 900 mm und einer Dichte von 25 bis 60 g/l.

Die Erfindung wird anhand der folgenden Beispiele erläutert. Die in den Beispielen genannten Teile sind Gewichtsteile.

Beispiele 1 bis 10

100 Teile Polystyrol mit einem Schmelzindex von 4,5, 1,5 Teile Hexabromcyclododecan als Flamm – schutzmittel und 1 Teil Talkum zur Regelung der Zellgröße wurden einem Extruder mit einem inneren Schneckendurchmesser von 120 mm kontinuierlich zugeführt. Durch eine in den Extruder angebrachte Einlaßöffnung wurde gleichzeitig ein Treibmittelgemisch in den Extruder kontinuierlich eingedrückt. Das in dem Extruder gleichmäßig geknetete Gel wurde dann nach einer Verweilzeit von 15 Minuten auf eine Austrittstemperatur von 105˚C gekühlt und durch eine 300 mm breite und 1,5 mm weite Düse in die Atmosphäre extrudiert. Der Schaum wurde durch einen mit dem Extruder verbundenen Formkanal geführt, wobei eine geschäumte Polystyrolplatte mit einer Querschnittsgröße von 650 mm x 50 mm entstand. Das geschäumte Produkt wurde in Stücke mit einer Querschnittsfläche von 600 mm x 50 mm und einer Länge von 1250 mm geschnitten. Geprüft wurden die Proben nach einer Ablagerzeit von 30 Tagen. Der in der Tabelle 1 angegebene $\lambda$ – Wert wurde aus Messungen nach 6 Monaten auf eine nach 2 – jährige Lagerzeit extrapoliert. Das Treibmittelgemisch für jedes Beispiel ist in der Tabelle 1 aufgeführt.

Gemessen wurde der $\lambda$ – Wert (Wärmeleitzahl) nach DIN 52 612, die Schaumstofffichte nach DIN 53 420, die Zellgröße nach ASTM D 3842 – 69, die geschlossenen Zellen nach DIN – ISO 4590, die Wasser – aufnahme an ganzen Platten nach DIN 53 434, die Druckfestigkeit nach DIN 53 421 und die Dimensions – stabilität nach DIN 53 431.

Tabelle 1

| Beispiel | Treibmittel-menge Gew.-% bezogen auf Polystyrol | $CF_2ClCH_3$ Gew.-% | $CF_2Cl_2$ Gew.-% | $C_2H_5Cl$ Gew.-% | $CO_2$ Gew.-% | n-Pentan Gew.-% | n-Butan Gew.-% | $CHF_2Cl$ Gew.-% | Wärmeleitzahl $\lambda$-Wert [W/m.K] |
|---|---|---|---|---|---|---|---|---|---|
| 1(Vgl) | 11 | 12 | 50 | 16 | 22 | – | – | – | 0,0280 |
| 2 | 7 | 48 | 10 | – | 42 | – | – | – | 0,0300 |
| 3 | 7,5 | 25 | 25 | – | 40 | 10 | – | – | 0,0285 |
| 4 | 9,0 | 25 | 20 | – | 5 | – | – | 50 | 0,0310 |
| 5(Vgl) | 14,0 | 30 | 10 | 50 | – | – | – | 10 | 0,0325 |
| 6(Vgl) | 15,6 | 10 | 10 | 5 | 5 | 45 | – | 25 | 0,0345 |
| 7 | 9,5 | 28 | 12 | – | 10 | – | 50 | – | 0,0325 |
| 8 | 7,8 | 15 | 15 | – | 20 | – | 50 | – | 0,0335 |
| 9 | 10,2 | 25 | 15 | – | 15 | – | 45 | – | 0,0318 |
| 10 | 8,5 | 20 | 30 | – | 30 | – | 20 | – | 0,0295 |

EP 0 360 030 B1

Tabelle 1 (Forts.)

| Beispiel | Schaumstoff-dichte kg/m³ | Zellgröße mm | geschlossene Zellen % | Wasseraufnahme Vol.-% | Druckfestigkeit [N/mm²] | Dimensionsstabilität in % | | |
|---|---|---|---|---|---|---|---|---|
| | | | | | | Länge | Breite | Dicke |
| 1 (Vgl.) | 32,0 | 0,2 | 94 | 0,12 | 0,29 | +1,4 | +1,5 | +0,4 |
| 2 | 32,8 | 0,22 | 93 | 0,14 | 0,28 | +1,5 | +1,7 | +0,3 |
| 3 | 31,0 | 0,25 | 90 | 0,16 | 0,25 | +0,5 | +0,6 | +0,1 |
| 4 | 34,0 | 0,3 | 96 | 0,08 | 0,31 | +0,7 | +0,9 | +0,3 |
| 5 (Vgl.) | 29,6 | 0,45 | 97 | 0,06 | 0,21 | +4,5 | +3,9 | +2,6 |
| 6 (Vgl.) | 37,0 | 0,15 | 96 | 0,07 | 0,38 | +7,2 | +5,8 | +4,2 |
| 7 | 33,4 | 0,13 | 95,5 | 0,10 | 0,40 | +7,3 | +4,9 | +3,0 |
| 8 | 34,0 | 0,13 | 95,5 | 0,09 | 0,42 | +7,1 | +4,6 | +2,8 |
| 9 | 33,6 | 0,22 | 93 | 0,12 | 0,27 | +0,6 | +0,8 | +0,2 |
| 10 | 34,5 | 0,19 | 96 | 0,11 | 0,29 | +0,9 | +0,9 | +0,1 |

**Patentansprüche**

1. Verfahren zur Herstellung von Schaumstoffplatten mit hoher Druckfestigkeit und hoher Dimensionsstabilität durch Extrusion eines Gemisches aus einem Styrolpolymerisat und 6 bis 16 Gew.−%, bezogen auf das Styrolpolymerisat eines Treibmittels sowie gegebenenfalls üblichen Zusatzstoffen, dadurch gekennzeichnet, daß man als Treibmittel ein Gemisch verwendet aus
   a) 10 bis 50 Gew.−% 1,1−Difluor−1−chlorethan

b) 10 bis 50 Gew.−% Dichlordifluormethan

c) 5 bis 50 Gew.−% Kohlendioxid

d) 0 bis 50 Gew.−% gesättigte $C_3$− bis $C_5$−Kohlenwasserstoffe, und

e) 0 bis 50 Gew.−% Monochlordifluormethan.

**2.** Verfahren gemäß Anspruch 1, dadurch gekennzeichnet, daß man als Treibmittel ein Gemisch verwendet aus

a) 20 bis 45 Gew.−% 1,1−Difluor−1−chlorethan

b) 20 bis 45 Gew.−% Dichlordifluormethan

c) 10 bis 40 Gew.−% Kohlendioxid

d) 0 bis 30 Gew.−% gesättigte $C_3$− bis $C_5$−Kohlenwasserstoffe, und

e) 0 bis 30 Gew.−% Monochlordifluormethan.

## Claims

**1.** A process for producing sheets of foam of high compressive strength and high dimensional stability by extrusion of a mixture of a styrene polymer and from 6 to 16 % by weight, based on the styrene polymer, of a blowing agent with or without customary additives, which comprises using as the blowing agent a mixture of

a) from 10 to 50 % by weight of 1,1−difluoro−1−chloroethane,

b) from 10 to 50 % by weight of dichlorodifluoromethane,

c) from 5 to 50 % by weight of carbon dioxide,

d) from 0 to 50 % by weight of a saturated $C_3$−$C_5$−hydrocarbon and

e) from 0 to 50 % by weight of monochlorodifluoromethane.

**2.** A process as claimed in claim 1, wherein the blowing agent used is a mixture of

a) from 20 to 45 % by weight of 1,1−difluoro−1−chloroethane,

b) from 20 to 45 % by weight of dichlorodifluoromethane,

c) from 10 to 40 % by weight of carbon dioxide,

d) from 0 to 30 % by weight of a saturated $C_3$−$C_5$−hydrocarbon, and

e) from 0 to 30 5 by weight of monochlorodifluoromethane.

## Revendications

**1.** Procédé de préparation de plaques en matière alvéolaire, à haute résistance à la pression et grande stabilité dimensionnelle, par extrusion d'un mélange d'un polymérisat de styrène et de 6 à 16 % en poids, rapporté au polymérisat de styrène, d'un gonflant, ainsi au'éventuellement d'additifs usuels, caractérisé par le fait qu'on utilise comme gonflant un mélange de

a) 10 à 50 % en poids de 1,1−difluoro−1−chloréthane

b) 10 à 50 % en poids de dichlorodifluorométhane

c) 5 à 50 % en poids de dioxyde de carbone

d) 0 à 50 % en poids d'hydrocarbure en C3−C5 saturé et

e) 0 à 50 % en poids de monochlorodifluorométhane.

**2.** Procédé selon la revendication 1, caractérisé par le fait que l'on utilise comme gonflant un mélange de

a) 20 à 45 % en poids de 1,1−difluoro−1−chloréthane

b) 20 à 45 % en poids de dichlorodifluorométhane

c) 10 à 40 % en poids de dioxyde de carbone

d) 0 à 30 % en poids d'hydrocarbure en C3−C5 saturé et

e) 0 à 30 % en poids de monochlorodifluorométhane.